**Europäisches Patentamt**

**European Patent Office**

**Office européen des brevets**

(19)

(11) Veröffentlichungsnummer : **0 102 488**
B1

(12) **EUROPÄISCHE PATENTSCHRIFT**

(45) Veröffentlichungstag der Patentschrift :
12.11.86

(51) Int. Cl.⁴ : **B 23 D 21/14, B 23 C 3/00**

(21) Anmeldenummer : **83106927.3**

(22) Anmeldetag : **14.07.83**

(54) Vorrichtung zum Abtrennen von Installationsdosen oder Rohrstutzen.

(30) Priorität : 06.08.82 DE 3229464
05.11.82 DE 3240918
18.05.83 DE 3318157

(43) Veröffentlichungstag der Anmeldung :
14.03.84 Patentblatt 84/11

(45) Bekanntmachung des Hinweises auf die Patenterteilung : 12.11.86 Patentblatt 86/46

(84) Benannte Vertragsstaaten :
AT BE CH FR GB IT LI NL SE

(56) Entgegenhaltungen :
DE-A- 1 602 842
DE-U- 7 221 007
US-A- 1 357 367
US-A- 2 731 718
US-A- 2 764 812
US-A- 3 304 597
US-A- 3 883 950
US-A- 4 227 431
US-A- 4 294 011

(73) Patentinhaber : Niebauer, Josef
Eichhof 2
D-8411 Altenthann (DE)

(72) Erfinder : Niebauer, Josef
Eichhof 2
D-8411 Altenthann (DE)

(74) Vertreter : Fleuchaus, Leo, Dipl.-Ing. et al
Fleuchaus & Wehser Melchiorstrasse 42
D-8000 München 71 (DE)

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Vorrichtung zum Abtrennen von über eine Wand oder eine Bodenfläche vorstehende Ränder einer Installationsdose oder eines Rohrstutzens nach dem Oberbegriff des Anspruchs 1.

Es wurde bereits vorgeschlagen, zur Vereinfachung von Installationen in die Wand oder den Fußboden bzw. in eine Decke einsetzbare Dosen zu benutzen, welche eine zylindrische Verlängerung haben, die nach dem Verputzen bzw. nach dem Verlegen von Platten oder einer Wandverkleidung über die fertige Wandoberfläche vorstehen. Derartige Dosen sind sowohl im Neubaubereich als auch im Bereich der Altbausanierung sehr vorteilhaft, da beim Setzen der Dosen keine Rücksicht auf die spätere Wandauflage oder Verkleidung genommen werden muß.

Das Abschneiden dieser Dosen mit handgeführten Messern oder einfachen Schneidwerkzeugen erweist sich als sehr unzweckmäßig, da ein sauberer Schnitt längs der Wandoberfläche ohne Beschädigung der Wand nur schwer möglich ist. Dies gilt auch für Rohrstutzen, welche beispielsweise in tiefsitzende Installationsdosen eingesetzt werden können, um bei einer Altbausanierung die elektrischen Leitungen geschützt bis zur Außenwandoberfläche zu führen.

Durch das DE-U-7 221 007 its bereits ein Fräseinsatz für Bohrmaschinen bekannt, bei welchem eine Schneidplatte im Umfangsbereich einer zentrisch mit einem Führungszapfen versehenen zylindrischen Scheibe angebracht ist.

Dieser Fräseinsatz dient zum Nacharbeiten der Stirnflächen abgeschnittener Gas- oder Wasserrohre. Ein planparalleles und bündiges Abfräsen der Stirnflächen eines Rohrstutzens zur Wand, aus welcher der Rohrstutzen ragt, ist nur sehr schwer ohne Beschädigung der Wand möglich, da der Führungszapfen keine ausreichende Sicherheit gegen ein schräges Ansetzen des Fräsers bietet. Dies ist insbesondere dann der Fall, wenn der Rohrstutzen nicht senkrecht aus der Wand ragt.

Der Erfindung liegt die Aufgabe zugrunde, eine Vorrichtung zu schaffen, mit welcher der über die Wand vorstehende Teil einer Installationsdose oder eines Rohrstutzens wandbündig leicht abgeschnitten werden kann, wobei die Gefahr besteht, daß die an die Dose angrenzende Wand während des Abschneidens beschädigt wird.

Diese Aufgabe wird durch das Kennzeichen des Anspruchs 1 gelöst.

Mit einer derartigen Vorrichtung kann in vorteilhafter Weise durch Verschieben des Schneidwerkzeughalters der überstehende Rand einer Installationsdose oder eines Rohrstutzens in der Ebene der Wandoberfläche abgeschnitten werden, so daß eine Beschädigung der angrenzenden Wandbereiche vermieden werden kann.

Dabei wird eine selbsttätige Rückführung des Werkzeugkopfes in die Ruhelage dadurch erreicht, daß am Ende der Welle eine Anschlagscheibe angebracht ist, gegen welche sich der Werkzeugkopf über eine Druckfeder abstützt, welche den Werkzeugkopf im Ruhezustand von der Anschlagscheibe weg verschiebt. Da dabei der Abstützrahmen als Dreifuß ausgebildet ist, in dessen gemeinsamen Scheitelblock die Welle gelagert ist, welche am vorderen Ende die in die Dose ragende Anschlagscheibe trägt, wird der Schneidwerkzeughalter grob zentriert. Eine Feinzentrierung erfolgt durch die drei um 120° versetzten Fräsmesser, wenn der Werkzeugkopf gegen den Dosenrand angelegt wird.

Eine Ausgestaltung der Erfindung sieht vor, daß der Werkzeugkopf die in die vordere Stirnfläche eingesetzten Fräsmesser trägt, wobei drei um 120° versetzte Fräsmesser Verwendung finden können.

Der Durchmesser der Anschlagscheibe ist derart gewählt, daß die Anschlagscheibe in einem Dosenkörper mit vier über den Umfang verteilten Befestigungshülsen innerhalb der durch die Befestigungshülsen bestimmten lichten Weite im Einsatz zu liegen kommet. Da es jedoch auch Dosenkörper gibt, bei welchen nur zwei Befestigungshülsen einander gegenüberliegend vorgesehen sind, läßt sich mit dieser Anschlagscheibe keine einwandfreie Zentrierung ermöglichen, da es nur schwer möglich ist, den Werkzeughalter im Betrieb zentrisch zum Dosenkörper festzuhalten. Ferner besteht die Gefahr, daß wegen der mangelnden Zentrierung die Fräsmesser ungleichmäßig greifen und der Dosenkörper nicht wandbündig einwandfrei abgeschnitten wird.

Es soll daher auch sowohl bei Dosenkörpern mit zwei als auch mit vier Befestigungshülsen die in den Dosenkörper eingreifende Anschlagscheibe eine sichere Zentrierung beim Abschneiden des Dosenkörpers gewährleistet sein.

Es ist daher vorgesehen, daß die am Ende der Welle angebrachte und in den Dosenkörper greifende Anschlagscheibe einen Außendurchmesser hat, der geringfügig kleiner als der Innendurchmesser des Dosenkörpers ist, und daß die Anschlagscheibe am äußeren Umfang mit Abflachungen versehen ist, in welche am Dosenkörper nach innen ragende Befestigungshülsen eingreifen können.

Anstelle der Abflachungen kann bei einer weiteren Ausgestaltung der Erfindung auch vorgesehen sein, daß kreisförmige oder elliptische Ausnehmungen vorhanden sind, die um die in das Innere des Dosenkörpers ragenden Befestigungshülsen greifen.

Durch die Maßnahmen wird in vorteilhafter Weise erreicht, daß die Anschlagscheibe innerhalb des Dosenkörpers immer zentrisch gehalten wird, selbst wenn die Fräsmesser durch ungleichmäßigen Eingriff den Werkzeughalter aus der zentrischen Lage zu verschieben suchen.

Da die Anschlagscheibe nur mit geringem Spiel in den Dosenkörper greift und sich im Betrieb solange mitdreht, bis die Abflachungen bzw. die Ausnehmungen an den Befestigungshülsen anliegen, ist eine sichere Zentrierung gewährleistet.

Es ist vorgesehen, die Fräsmesser derart zu gestalten, daß sie eine von innen nach außen verlaufende, schräg ansteigende Schnittfläche ergeben. Zu diesem Zweck ist vorgesehen, daß das Fräsmesser eine gerade oder eine winkelige oder eine kontinuierlich gekrümmte Schneidkante, vorzugsweise eine kreisförmige Schneidkante hat.

Um die Vorrichtung an unterschiedliche Durchmesser von Installationsdosen oder Rohrstutzen anpassen zu können, ist vorgesehen, daß die Anschlagscheibe auswechselbar ist.

Eine Ausgestaltung zur Längsverschiebung des Schneidwerkzeughalters sieht vor, daß zu diesem Zweck auf der Welle eine Schiebehülse gehaltert ist, in welche das Verschiebemoment eingeleitet wird. Bei einer besonderen Ausgestaltung ist vorgesehen, daß die Verschiebehülse mit Hilfe eines zweiarmigen Hebels verschiebbar ist, dessen Drehachse am einen Bein des Dreifußes gelagert ist und mit dem einen Ende an der Verschiebehülse angreift. Dieser Angriffspunkt kann als Schlitzführung ausgebildet sein.

Die Erfindung mit ihren Vorteilen und Merkmalen wird anhand eines auf die Zeichnung bezugnehmenden Ausführungsbeispiels näher erläutert. Es zeigen :

Figur 1  eine Seitenansicht einer ersten Ausführungsform der Erfindung ;

Figur 2  eine Ansicht von unten auf die Vorrichtung gemäß Fig. 1 ;

Figur 3  eine vergrößerte Teilansicht des Werkzeugkopfes und eines an der Dose angreifenden Fräsmessers ;

Figur 4  einen Schnitt längs der Linie IV-IV der Fig. 1 mit einer anderen Ausführungsform der Anschlagscheibe ;

Figur 5  einen Schnitt längs der Linie IV-IV der Fig. 1 mit einer weiteren Ausführungsform der Anschlagscheibe ;

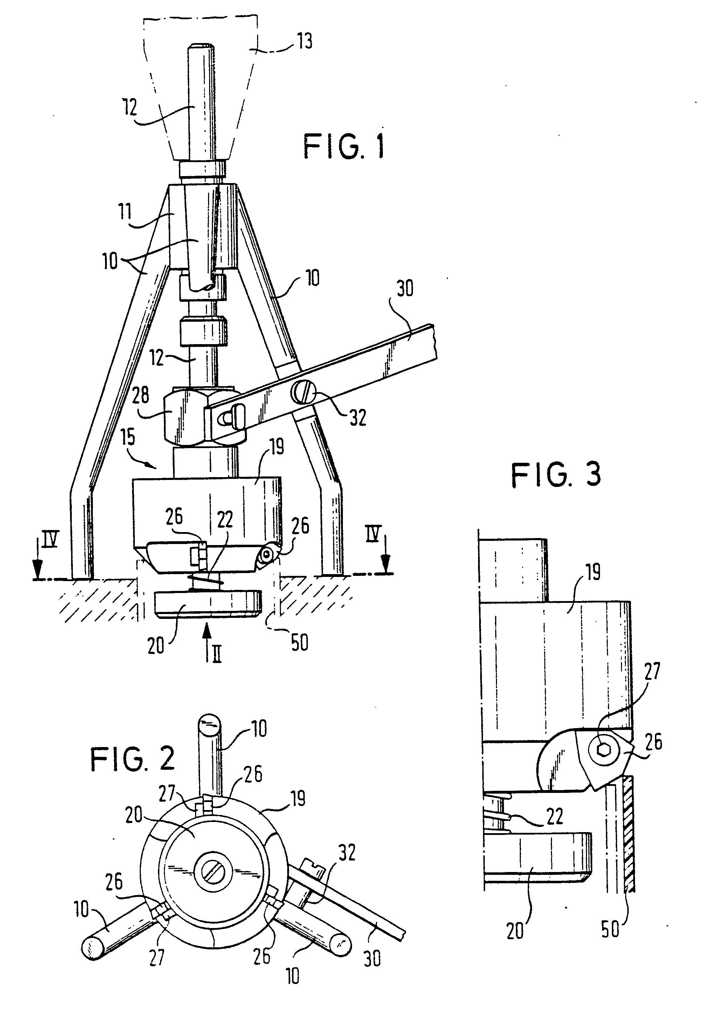

Die in Fig. 1 dargestellte Vorrichtung zum Abtrennen von über eine Wand oder eine Bodenfläche vorstehende Installationsdose besteht aus einem Dreifuß 10, in dessen Scheitelblock 11 eine Welle 12 drehbar gelagert ist. Der Antrieb der Welle erfolgt mit Hilfe eines Fremdantriebs bzw. einer Bohrmaschine, die mit ihrem Bohrfutter 13 an der Welle 12 angreift. Dieser Antrieb kann elektrisch, hydraulisch oder pneumatisch sein. Es kann wahlweise ein Fremd- oder Eigenantrieb verwendet werden.

Auf der Welle 12 ist im unteren Bereich ein Schneidwerkzeughalter 15 vorgesehen, der im wesentlichen aus einem Werkzeugkopf 19 besteht und in den Randbereich der vorderen Stirnfläche eingesetzte Fräsmesser 26 trägt. Diese Fräsmesser werden am Werkzeugkopf 19 mit Hilfe von Schrauben 27 befestigt. Die Schneidkante dieser Fräsmesser kann sowohl geradlinig als auch winkelig, wie in der Zeichnung dargestellt, oder auch kontinuierlich gekrümmt sein. Um ein Verlaufen beim Abfräsen der Dose zu vermeiden, ist vorgesehen, jeweils um 120° versetzt drei Fräsmesser am Werkzeugkopf zu befestigen. Der Werkzeugkopf 19 ist auf der Welle 12 in Längsrichtung verschiebbar gelagert, so daß er sich mit der Welle dreht. Zu diesem Zweck kann eine nicht dargestellte Nut in der Welle vorgesehen sein, in welche eine am Werkzeugkopf befestigte Feder bzw. ein Bolzen eingreift und geführt ist. Zwischen der Stirnseite des Werkzeugkopfes 19 und einer am vorderen Ende der Welle befestigten Anschlagscheibe 20 ist eine Druckfeder 22 angeordnet, die den Werkzeugkopf in Richtung des Scheitelblockes 11 verschiebt.

Zwischen dem Werkzeugkopf 19 und dem Scheitelblock 11 ist auf der Welle 12 eine Verschiebehülse 28 längsverschiebbar und drehbar angeordnet, an welcher das eine Ende eines zweiarmigen Hebels 30 befestigt ist. Mit Hilfe dieses Hebels 30 läßt sich ein Moment auf die Verschiebehülse 28 einleiten, um diese gegen den Werkzeugkopf 19 zu drücken und den Werkzeugkopf auf der Welle 12 gegen den Druck der Feder 22 nach vorn zu verschieben. Der Hebel 30 ist am einen Bein des Dreifußes 10 mittels einer Bolzenschraube 32 schwenkbar gelagert.

Wenn mit Hilfe des Hebels 30 ein Verschiebemoment auf die Verschiebehülse 28 und damit auf den Werkzeugkopf 19 eingeleitet wird, läßt sich dieser gegen den Druck der Feder 22 bei einer richtigen Positionierung des Dreifußes über der Dose zentrisch gegen die Dose verschieben, so daß die Fräsmesser 26 den überstehenden Rand der Dose abschneiden. Mit Hilfe des Hebels 30 ist eine feine Positionierung möglich, so daß die Dose bündig mit der Wandoberfläche, auf welcher der Dreifuß abgestellt ist, abschließt.

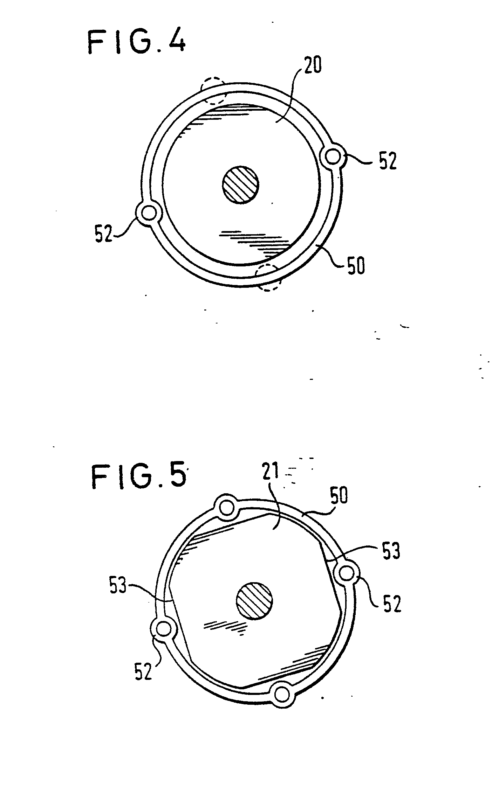

In Fig. 4 ist eine Schnitt längs der Linie IV-IV der Fig. 1 dargestellt, welche die Anschlagscheibe 20 in Draufsicht erkennen läßt. Ferner ist ein Dosenkörper 50 dargestellt, der nur zwei Befestigungshülsen 52 hat. Um den Unterschied gegenüber einem Dosenkörper mit vier Befestigungshülsen anzudeuten, sind zwei weitere Befestigungshülsen gestrichelt eingezeichnet. Man kann erkennen, daß bei einem Dosenkörper 50 mit nur zwei Befestigungshülsen 52 die Anschlagscheibe 20 in einer Richtung senkrecht zum durch die Befestigungshülsen 52 verlaufenden Durchmesser keine Führung hat und somit in dieser Richtung während des Betriebes infolge der beim Abschneiden auftretenden Kräfte ausweichen kann. Dadurch ergibt sich eine Schlagbewegung, die ein sauberes Abschneiden des Dosenkörpers nur schwer zuläßt.

In Fig. 5 ist eine der Fig. 2 entsprechende Ansicht für eine Vorrichtung zum Abtrennen von Installationsdosen oder Rohrstücken dargestellt, welche mit einer Anschlagscheibe 20 gemäß der Erfindung versehen ist. Diese Anschlagscheibe 20 ist mit Abflachungen 53 versehen, und zwar in dem Bereich, wo die Befestigungshülsen 52 des Dosenkörpers zu liegen kommen.

Vorzugsweise sind vier Abflachungen in gleichmäßiger Verteilung über den Umfang vorgesehen, so daß die Anschlagscheibe sowohl bei Dosenkörpern mit zwei Befestigungshülsen als auch mit vier Befestigungshülsen Verwendung finden kann und eine sichere Zentrierung gewährleistet. Im Betrieb dreht sich die Anschlagscheibe 20 geringfügig um ihren Mittelpunkt, so daß die Abflachungen an den Befestigungshülsen zur Anlage kommen und das Werkzeug sicher zentrieren.

Anstelle der dargestellten Abflachungen 53 können auch kreisförmige Ausnehmungen oder elliptische Ausnehmungen am Umfang der Anschlagscheibe vorgesehen sein, welche in ihren Abmessungen ausreichend groß sind, um die Befestigungshülsen zu greifen. Damit wird sichergestellt, daß die Anschlagscheibe gemäß der Erfindung, welche nur einen geringfügig kleineren Durchmesser als der Innendurchmesser des Dosenkörpers hat, in dem Dosenkörper während des Betriebes sicher zentrisch gehalten wird und ein Schlagen des Werkzeughalters verhindert. Damit wird ein sauberer, glatter Schnitt in der Ebene der Wand beim Abschneiden des Dosenkörpers bzw. eines Rohrstutzens gewährleistet.

## Patentansprüche

1. Vorrichtung zum Abtrennen von über eine Wand oder eine Bodenfläche vorstehenden Rändern einer Installationsdose oder eines Rohrstutzens, wobei auf einer getriebenen Welle (12) ein mit der Welle sich drehender Werkzeugkopf (19) gelagert ist, der auf seinem Umfang verteilt zumindest ein Fräsmesser (26) trägt, und die Welle (12) ein als Zentriermittel dienendes Teil trägt, dadurch gekennzeichnet, daß das Zentriermittel als Anschlagscheibe (20) ausgebildet ist, gegen welche sich der Werkzeugkopf (19) über eine Druckfeder (22) abstützt, die den Werkzeugkopf (19) im Ruhezustand von der Anschlagscheibe weg verschiebt, daß die Welle (12) in einem Abstützrahmen (10) gelagert ist, und daß der Werkzeugkopf (19) längs verschiebbar ist.

2. Vorrichtung nach Anspruch 1, dadurch gekennzeichnet, daß der Werkzeugkopf (19) auf der Welle (12) längs verschiebbar ist.

3. Vorrichtung nach Anspruch 1 und 2, dadurch gekennzeichnet, daß der Werkzeugkopf (19) die in die vordere Stirnfläche eingesetzten Fräsmesser (26) trägt.

4. Vorrichtung nach Anspruch 3, dadurch gekennzeichnet, daß drei um 120° versetzte Fräsmesser (26) Verwendung finden.

5. Vorrichtung nach den Ansprüchen 1 bis 4, dadurch gekennzeichnet, daß die Anschlagscheibe (20) am äußeren Umfang mit Abflachungen (53) versehen ist.

6. Vorrichtung nach Anspruch 5, dadurch gekennzeichnet, daß anstelle der Abflachungen (53) kreisförmige oder elliptische Ausnehmungen am Umfang der Anschlagscheibe (20) angebracht sind.

7. Vorrichtung nach einem der Ansprüche 1 bis 6, dadurch gekennzeichnet, daß das Fräsmesser (26) eine gerade oder eine winkelige oder eine kontinuierlich gekrümmte Schneidkante, vorzugsweise eine kreisförmige Schneidkante hat.

8. Vorrichtung nach Anspruch 1, dadurch gekennzeichnet, daß der Abstützrahmen als Dreifuß (10) ausgebildet ist, in dessen gemeinsamem Scheitelblock (11) die Welle (12) gelagert ist.

9. Vorrichtung nach einem oder mehreren der Ansprüche 1 bis 8, dadurch gekennzeichnet, daß zur Längsverschiebung des Werkzeugkopfes (19) auf der Welle (12) eine Verschiebehülse (28) gelagert ist, in welche das Verschiebemoment einleitbar ist.

10. Vorrichtung nach einem oder mehreren der Ansprüche 1 bis 9, dadurch gekennzeichnet, daß die Verschiebehülse (29) mit Hilfe eines zweiarmigen Hebels (30) verschoben wird, dessen Drehachse an einem Bein des Dreifußes (10) gelagert ist und der mit einem Ende an der Verschiebehülse (28) angreift.

11. Vorrichtung nach den Ansprüchen 1 bis 10, dadurch gekennzeichnet, daß die Anschlagscheibe (20) auswechselbar ist.

## Claims

1. Device for removing edges projecting from a wall or a bottom face of an installation box or pipe, wherein on a driven shaft (12) a tool head (19) rotating with the shaft is mounted which carries distributed on its periphery at least one milling cutter (26) and the shaft carries a member serving as centering means, characterized in that the centering means is formed as stop disc (20) against which the tool head (19) bears via a pressure spring (22) which displaces the tool head (19) in the rest state away from the stop disc, that the shaft (12) is mounted in a support frame (10) and that the tool head (19) is longitudinally displaceable.

2. Device according to claim 1, characterized in that the tool head (19) is longitudinally displaceable on the shaft (12).

3. Device according to claim 1 and 2, characterized in that the tool head (19) carries the milling cutters (26) inserted in the front end face.

4. Device according to claim 3, characterized in that three milling cutters (26) offset by 120° are used.

5. Device according to claims 1 to 4, characterised in that the stop disc (20) is provided with flattenings (53) at the outer periphery.

6. Device according to claim 5, characterized in that instead of the flattenings (53) circular or elliptical recesses are formed on the periphery of the stop disc (20).

7. Device according to any one of claims 1 to 6, characterized in that the milling cutter (26) has a straight or angled or continuously curved cutting edge, preferably a circular cutting edge.

8. Device according to claim 1, characterized in that the support frame is constructed as tripod (10) in the common apex block (11) of which the shaft (12) is mounted.

9. Device according to one or more of claims 1 to 8, characterized in that for longitudinal displacement of the tool head (19) on the shaft (12) a displacement sleeve (28) is mounted into which a displacement moment can be introduced.

10. Device according to one or more of claims 1 to 9, characterized in that the displacement sleeve (29) is displaced with the aid of a two-armed lever (30), the axis of rotation of which is mounted on a leg of the tripod (10) and which engages with one end on the displacement sleeve (28).

11. Device according to claims 1 to 10, characterized in that the stop disc (20) is replaceable.

**Revendications**

1. Dispositif pour couper le bord d'une boîte d'installation ou d'un embout de tuyau qui dépasse d'une paroi ou de la surface d'un sol dans lequel une tête à outil (19) montée sur un arbre entraîné (12) et tournant avec cet arbre porte au moins un couteau-fraise (26) réparti sur sa périphérie et l'arbre (12) porte une pièce servant de moyen de centrage, caractérisé en ce que le moyen de centrage est réalisé sous la forme d'un disque de butée (20) contre lequel la tête à outil (19) prend appui par un ressort (22) qui repousse cette tête à la position de repos en l'écartant du disque de butée (20), que l'arbre (12) est monté dans un cadre-support (10), et que la tête à outil (19) peut être déplacée longitudinalement.

2. Dispositif selon la revendication 1, caractérisé en ce que la tête à outil (19) peut être déplacée longitudinalement sur l'arbre (12).

3. Dispositif selon les revendications 1 et 2, caractérisé en ce que la tête à outil (19) porte les couteaux-fraises (26) montés dans sa surface frontale antérieure.

4. Dispositif selon la revendication 3, caractérisé en ce que trois couteaux-fraises décalés de 120° sont utilisés.

5. Dispositif selon les revendications précédentes, caractérisé en ce que le disque de butée (20) est muni de plats (53) sur sa périphérie extérieure.

6. Dispositif selon la revendication 5, caractérisé en ce que les plats (53) sont remplacés par des évidements circulaires ou elliptiques sur la périphérie du disque de butée (20).

7. Dispositif selon l'une des revendications précédentes, caractérisé en ce que le couteau-fraise (26) a une arête coupante droite ou anguleuse ou incurvée de façon continue, de préférence une arête coupante circulaire.

8. Dispositif selon la revendication 1, caractérisé en ce que le cadre-support est réalisé sous la forme d'un trépied (10) dans le bloc sommital commun (11) duquel l'arbre (12) est monté tournant.

9. Dispositif selon l'une ou plusieurs des revendications précédentes, caractérisé en ce que, pour produire le déplacement longitudinal de la tête à outil (19) sur l'arbre (12), une douille coulissante (28) est montée sur celui-ci, à laquelle un effort de déplacement peut être appliqué.

10. Dispositif selon l'une ou plusieurs des revendications précédentes, caractérisé en ce que la douille coulissante (28) est déplacée à l'aide d'un levier à deux bras (30) dont l'axe de rotation est monté sur un pied du trépied (10) et qui est en prise avec la douille (28) par une extrémité.

11. Dispositif selon les revendications précédentes, caractérisé en ce que le disque de butée (20) est interchangeable.

FIG. 1

FIG. 3

FIG. 2

# FIG.4

# FIG.5